Europäisches Patentamt

(19) European Patent Office

Office européen des brevets

(11) **EP 1 191 520 B1**

(12) **EUROPEAN PATENT SPECIFICATION**

(45) Date of publication and mention
of the grant of the patent:
**13.07.2005 Bulletin 2005/28**

(51) Int Cl.⁷: **G11B 7/0045**, G11B 7/125

(21) Application number: **01308160.9**

(22) Date of filing: **26.09.2001**

(54) **Information record apparatus, information record method, and information record medium**

Informationsaufzeichnungsgerät, Informationsaufzeichnungsverfahren und
Informationsaufzeichnungsmedium

Appareil d'enregistrement d'informations, procédé d'enregistrement d'informations et support
d'enregistrement d'informations

(84) Designated Contracting States:
**DE FR GB**

(30) Priority: **26.09.2000 JP 2000292361**

(43) Date of publication of application:
**27.03.2002 Bulletin 2002/13**

(73) Proprietor: **Pioneer Corporation
Meguro-ku, Tokyo (JP)**

(72) Inventors:
 • **Shimoda, Yasuhisa, c/o Pioneer Corporation
   Tokorozawa-shi, Saitama (JP)**
 • **Matsumoto, Masaaki, c/o Pioneer Corporation
   Tokorozawa-shi, Saitama (JP)**

(74) Representative: **Haley, Stephen
   Gill Jennings & Every,
   Broadgate House,
   7 Eldon Street
   London EC2M 7LH (GB)**

(56) References cited:
   **EP-A- 0 712 130**          **US-A- 5 436 880**
   **US-A- 5 903 537**

   • **PATENT ABSTRACTS OF JAPAN vol. 1997, no.
     08, 29 August 1997 (1997-08-29) & JP 09 091705
     A (RICOH CO LTD), 4 April 1997 (1997-04-04)**

**Description**

This invention relates to an information record apparatus for performing power calibration when recording information on an optical information record medium such as a write-once optical disk or a rewritable optical disk, for example.

In recent years, in addition to read-only CD (compact disk) and DVD (digital video disk or digital versatile disk), write-once (recordable) CD and DVD, rewritable CD and DVD, MD (mini disk), and the like have been developed for increasing the number of variations of the optical information recordmedia.

In write-once (recordable) CD and DVD, which will be hereinafter collectively called write-once optical disk, write laser light is applied to a record film of an organic coloring matter material for forming record pits, thereby irreversibly recording information. In rewritable CD and DVD, which will be hereinafter collectively called rewritable optical disk, write laser light is applied to a phase change film for repeating crystallization and rendering amorphous, thereby reversibly recording information as circular or elliptic record pits. In MD, magneto-optical recording is performed.

In an information record apparatus in a related art, to form a record pit in appropriate form in the write-once optical disk and rewritable optical disk for recording information, power calibration is conducted to adjust the emission power of a semiconductor laser for emitting write laser light, placed in a pickup at the setup time before essential information recording is performed.

In the power calibration, record pits are formed in a power calibration area provided at the inner radius of an optical disk and the emission power of the semiconductor laser is optimized based on the waveform provided, for example, by AC coupling a detection signal, called HF signal, provided by optically reading the record pits formed (namely, written for a try) in the power calibration area.

That is, as with the case where normal information reading is executed, reflected light from the power calibration area in which the record pits are formed is detected by a photodetector and outputs of the photodetector are combined, whereby the HF signal is generated. This means that the HF signal is a signal before equalizing to generate an RF signal, etc., is performed.

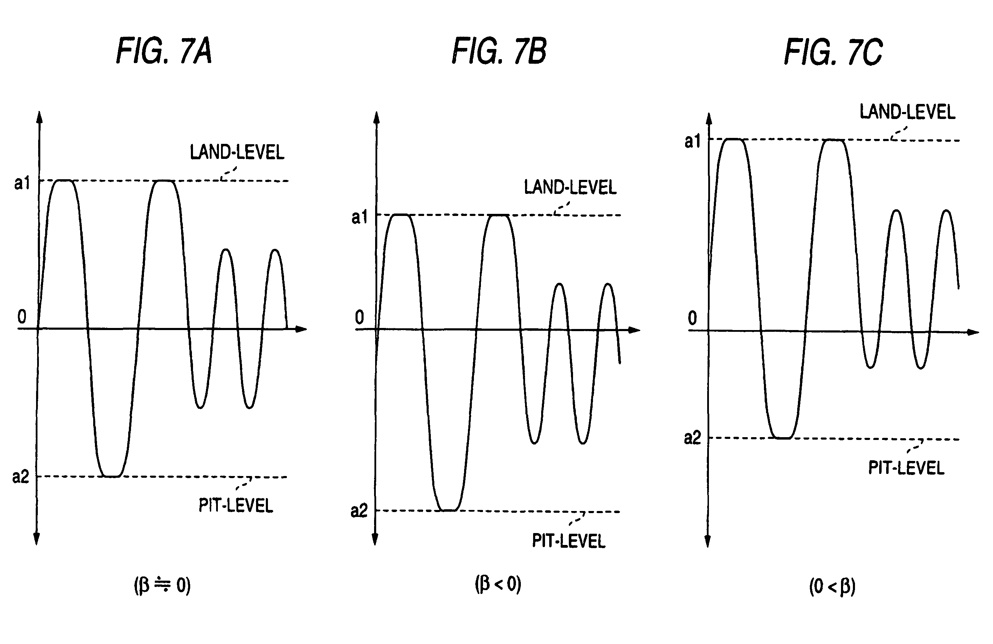

As the HF signal is thus generated, an eye pattern of the HF signal is provided. If the waveform is AC-coupled, top peak level a1 of the waveform indicates the potential difference between the potential indicating the strength of reflected light from a land where no record pit is formed and the potential of AC ground GND and bottom peak level a2 indicates the potential difference between the potential indicating the strength of reflected light from a record pit and the potential of AC ground GND, as shown in FIG. 7 (A).

The ratio between the peak-to-peak value of the HF signal (a1+a2) and the difference between the levels (a1-a2), which will be hereinafter referred to as β value, is found as shown in the following expression (1), and, for example, when β value=0 is adopted as the target of the power calibration, if the β value becomes almost 0, it is determined that the emission power P of the semiconductor laser is equal to target power Pw; if the waveform provided by AC coupling the HF signal becomes the waveform shown in FIG. 7 (B) and the β value becomes a negative value, it is determined that the emission power P of the semiconductor laser is smaller than the target power Pw; and if the waveform provided by AC coupling the HF signal becomes the waveform shown in FIG. 7 (C) and the β value becomes a positive value, it is determined that the emission power P of the semiconductor laser is larger than the target power Pw. The emission power P of the semiconductor laser is adjusted so as to become equal to the target power Pw based on each determination result.

$$\beta = (a1-a2)/(a1+a2) \tag{1}$$

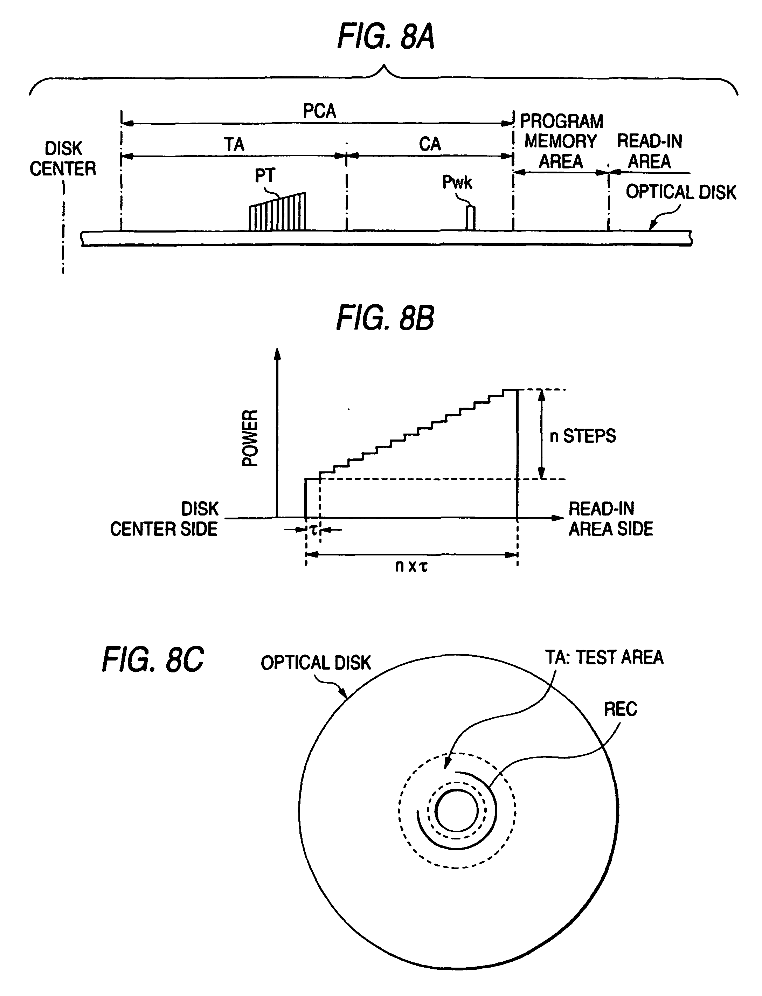

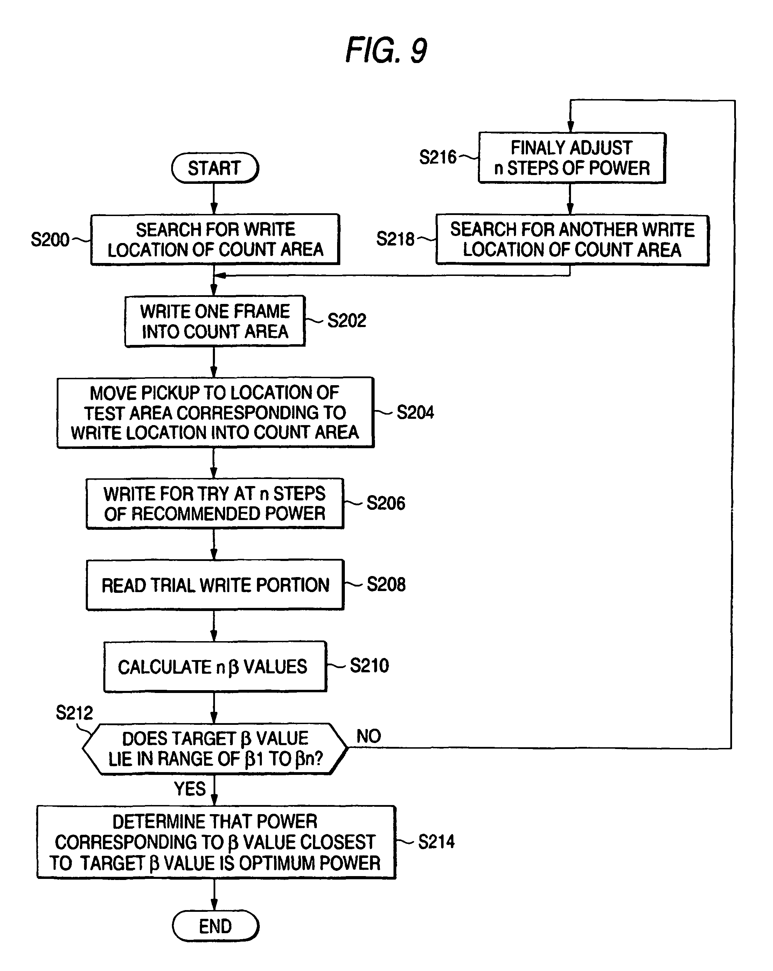

Further, as a more specific example, the power calibration in the related art for CD-R will be discussed with reference to FIGS. 8 and 9.

In CD-R, as shown in FIG. 8 (A), a power calibration area PCA made up of a test area TA and a count area CA is previously allocated; the test area TA is an area for forming a record pit as trial write and the count area CA is an area to count the number of write times into the test area TA to locate the portion to execute trial write in the test area TA.

In the information record apparatus in the related art, as shown in a flowchart of FIG. 9, first a search is made for the write location of the count area CA (step S200) and a record to check the number of write times into the test area TA is entered in the write location (step S202) and then the pickup is moved to the location corresponding to the write location into the count area CA in the test area TA (step S204).

Next, the emission power P of the semiconductor laser is changed at n steps of recommended power as shown in FIG. 8 (B), whereby record pits REC at n steps are written for a try into a predetermined portion of the test area TA as shown in FIG. 8 (C) (step S206). That is, the emission power P is changed every predetermined time τ, whereby the record pits REC at n steps corresponding to the n steps of the emission power P are written for a try.

Upon completion of the trial write, the record pits REC at n steps are optically read with the pickup to detect HF signals corresponding to the record pits at n steps (step S208).

Next, the calculation of the expression (1) shown above is performed based on each of the HF signals, whereby n β values (β1 to βn) are found (step S210) and whether or not a target β value is contained in the range of the β values (β1 to βn) is determined (step S212).

If the target β value lies in the range, the β value closest to the target β value is found and the emission power P corresponding to the β value is adopted as optimum power Popt for setting the emission power of the semiconductor laser (step S214) before the essential information recording is started.

If the target β value does not lie in the range, the n steps of the emission power are finely adjusted (step S216) and a search is made for a new data write location of the count area CA (step S218) and step S202 and the later steps are repeated. If the target β value is contained in the range at step S212, the power calibration is completed.

[Problems to be Solved by the Invention]

However, the power calibration in the related art requires a long time in optimizing the emission power of the semiconductor laser, prolonging the setup time before the essential information recording is started.

That is, as shown in FIGS. 8 (B) and 8 (C), if the emission power of the semiconductor laser is changed at n steps for forming the record pits REC, the portion into which the record pits REC are written becomes a long duration of n X τ. Thus, for example, if eccentricity or side run-out occurs on the optical disk during the trial write, adversely affected record pits REC are written and if the portion into which the record pits REC are written is read and β values are found, it is made impossible to provide the β values corresponding to the record pits at n stages (β1 to βn) with good accuracy. Thus, as shown in the flowchart of FIG. 9, processing is repeated a large number of times until the β value equal to the target β value is provided, and the setup time is prolonged; this is a problem.

If eccentricity, side run-out, etc., occurs on the optical disk during the trial write and adversely affected record pits REC are written, the emission power of the semiconductor laser is optimized based on erroneous β values, namely, erroneous adjustment occurs and it becomes difficult to maintain and improve the accuracy of the power calibration; this is a problem.

Further, for an unrewritable optical information record medium, the power calibration are is limited and if a large area used for one power calibration is taken, the remaining number of power calibration use times is reduced; this is also a problem.

It is therefore an object of the invention to provide an information record apparatus and an information record method for making it possible to overcome the above-described problems and improve the accuracy of power calibration.

It is another object of the invention to provide an information record medium recording control information to improve the accuracy of power calibration for controlling an electronics machine based on the control information.

EP-A-0712130 discloses an optical disk write method whereby data is written in an lead-in area and a lead-out area with no interval between these two areas.

According to the present invention, there is provided an information record apparatus for adjusting power of write light onto an optical information record medium, the information record apparatus comprising:

a light source for emitting write light having a predetermined power;
a power adjustment section for adjusting the emission power (P) of the write light;
a control section for controlling the power adjustment section to set a plurality of write light each having a different emission power;
a write section for applying the plurality of write light emitted from the light source to record a plurality of record pits in the optical information record medium; and
a feature extraction section for optically reproducing a plurality of record states containing the plurality of record pits to produce a first signal waveform, the feature extraction section extracting a first feature information of the plurality of record states for each of the plurality of record pits based on the first signal waveform,

wherein the control section determines that power of write light corresponding to feature information closest to or equal to target feature information, of the first feature information extracted by the feature information section is appropriate write light power, and controls the power adjustment section in use so that a power of the write light emitted from the light source is identical with the appropriate write light power, characterised in that:

the write section is adapted to record a single record pit to the record medium before the write section records the plurality of record pits to the record medium;
the feature extraction section optically reproduces a record state containing the single record pit to produce a second signal waveform, the feature extraction section extracting a second feature information of the record state based on the second signal waveform, and
the control section sets the plurality of write light based on the second feature information extracted by the feature extraction section.

In the information record apparatus, the write section records a plurality of sets of record pits at a plurality of steps in the optical information record medium by applying the write light of the plurality of steps of power, the feature extraction section extracts the feature information of the record state for each of the record pits in the plurality of sets and at the plurality of steps based on the signal waveform provided by optically reproducing the record states containing the plurality of sets of the recorded record pits, and the control section finds average feature information of the record state for each of the record pits at the plurality of steps, determines that power of write light corresponding to the information closest to or almost equal to the target feature information, of the average feature information is appropriate write light power, and causes the power adjustment section to adjust the emission power of the write light.

According to the information record apparatus having the configuration, a record pit is recorded in the optical information record medium by applying write light of predetermined power, the feature information of the record state is extracted based on the signal waveform provided by optically reproducing the record pit in the record portion, and write light of a plurality of steps of power is set based on the feature information. Next, record pits at a plurality of steps are recorded in the optical information record medium by applying the write light of the plurality of steps of power, the feature information of the record state for each of the record pits at the plurality of steps is extracted based on the signal waveform provided by optically reproducing the record states containing the record pits at the plurality of steps, it is determined that power of write light corresponding the information closest to or almost equal to the target feature information, of the feature information of the record state for each of the record pits at the plurality of steps is appropriate write light power, and the emission power of the write light is adjusted.

Thus, trial write onto the optical information record medium is executed by applying the write light of the predetermined power, whereby write light of the plurality of steps of power for trial write to determine appropriate write light power are determined, and trial write onto the optical information record medium is executed by applying the write light of the plurality of steps of power, the feature information of the record state for each of the record pits at the plurality of steps is extracted based on the signal waveform provided by optically reproducing the record states containing the record pits at the plurality of steps, it is determined that power of write light corresponding the information closest to or almost equal to the target feature information, of the feature information of the record state for each of the record pits at the plurality of steps is the appropriate write light power, and the emission power of the write light is optimized, so that the time required for the power calibration can be shortened.

A plurality of sets of record pits at a plurality of steps are recorded in the optical information record medium by applying the write light of the plurality of steps of power, the feature information of the record state for each of the record pits in the plurality of sets and at the plurality of steps is extracted based on the signal waveform provided by optically reproducing the record states containing the plurality of sets of the recorded record pits, average feature information of the record state for each of the record pits at the plurality of steps is found, it is determined that power of write light corresponding the information closest to or almost equal to the target feature information, of the average feature information is appropriate write light power, and the emission of the write light is optimized.

The appropriate write light power is determined based on the average feature information of the record state for each of the record pits at the plurality of steps, thereby improving the accuracy of power calibration.

According to the present invention, there is also provided an information record method for adjusting power of write light onto an optical information record medium, the information record method comprising the steps of:

> applying a plurality of write light to record a plurality of record pits in the optical information record medium;
> optically reproducing a plurality of record states containing the record pits to produce a second signal waveform;
> extracting the feature information of the record state for each of the record pits based on the second signal waveform;
> determining that power of write light corresponding to information closest to or almost equal to target feature information, of the feature information of the record state for each of the record pits is appropriate write light power; and
> adjusting the power of the write light in use to be identical with the appropriate write light power, characterised by the steps of:

>> applying write light having specific power or predetermined power emitted from a light source to record a single record pit in the optical information record medium;
>> optically reproducing a record state containing the record pit to produce a second signal waveform;
>> extracting second feature information of the record state based on the first signal waveform;
>> setting the plurality of write light each having a different emission power based on the second feature information.

According to the information record method of the invention, a record pit is recorded in the optical information record medium by applying write light of predetermined power, the feature information of the record state is extracted based on the signal waveform provided by optically reproducing the record pit in the record portion, and write light of a plurality of steps of power is set based on the difference between the feature information and the target feature information. Next, record pits at a plurality of steps are recorded in the optical information record medium by applying the write light of the plurality of steps of power, the feature information of the record state for each of the record pits at the plurality of steps is extracted based on the signal waveform provided by optically reproducing the record states containing the record pits at the plurality of steps, it is determined that power of write light corresponding the information closest to or almost equal to the target information, or the feature information of the record state for each of the record pits at the plurality of steps is appropriate write light power, and the emission power of the write light is adjusted.

According to the present invention, there is also provided an information record medium recording a control information program to be executed in a computer, the control information program comprising:

applying a plurality of write light to record a plurality of record pits in the optical information record medium;

optically reproducing a plurality of record states containing the record pits to produce a second signal waveform;

extracting the feature information of the record state for each of the record pits based on the second signal waveform;

determining that power of write light corresponding to information closest to or almost equal to target feature information, of the feature information of the record state for each of the record pits is appropriate write light power; and

adjusting the power of the write light in use to be identical with the appropriate write light power, characterised by the steps of:

applying write light having specific power or predetermined power emitted from a light source to record a single record pit in the optical information record medium;

optically reproducing a record state containing the record pit to produce a second signal waveform;

extracting second feature information of the record state based on the first signal waveform;

setting the plurality of write light each having a different emission power based on the second feature information.

According to the information record medium of the invention, if the recorded control information is executed in an electronic machine such as a personal computer, it is made possible to emulate the function of the information record apparatus implemented as hardware and record information by applying write light of appropriate power.

In the drawings:

Fig. 1 is a block diagram to show the configuration of an information record apparatus of an embodiment of the invention.

Fig. 2 is a drawing to show data stored in a storage section in the embodiment of the invention.

Fig. 3 is a drawing to show the format of a calibration area of CD-R.

FIG. 4 is a flowchart to describe the operation of the embodiment of the invention.

FIG. 5 is a drawing to describe the principle for setting the optimum emission power in the embodiment of the invention.

FIG. 6 is a waveform chart to describe the principle for finding $\alpha$ value from HF signal.

FIG. 7 is a waveform chart to describe the principle for finding $\beta$ value from HF signal.

FIG. 8 is a drawing to describe the principle for setting the optimum emission power in a related art.

FIG. 9 is a flowchart to describe a method for setting the optimum emission power in the related art.

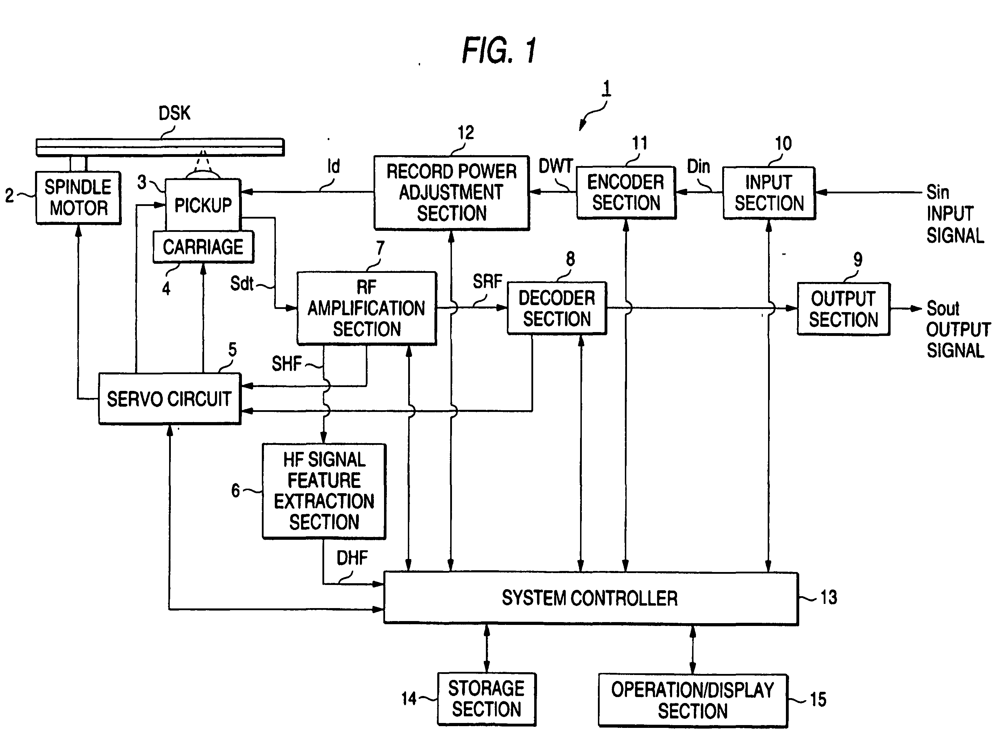

Referring now to the accompanying drawings, there is shown a preferred embodiment of the invention. FIG. 1 is a block diagram to show the configuration of an information record apparatus 1 of an embodiment.

In the figure, the information record apparatus 1 comprises a spindle motor 2, a pickup 3, and a carriage 4 on which the pickup 3 is mounted.

The spindle motor 2 is spindle-servoed by a servo circuit 5 and rotates a write-once or rewritable optical disk DSK placed at a clamp position at a predetermined linear speed.

The pickup 3 comprises a semiconductor laser (not shown), an optical system (not shown) comprising an object lens, and a photodetector (not shown) formed of a photodiode, etc.

To record information, write laser light of predetermined power optimized by light pulse strategy is emitted from the semiconductor laser and is made to converge by the optical system, whereby a write light beam is generated, and a spot of the write light beam is applied to the optical disk DSK through the object lens for forming a record pit in a record film of the optical disk DSK.

When information is reproduced, read laser light of predetermined power is emitted from the semiconductor laser and is made to converge by the optical system, whereby a read light beam is generated, and a spot of the read light beam is applied to the optical disk DSK through the object lens. Reflected light from the optical disk DSK is gathered by the optical system and a photoelectric conversion signal Sdt provided by executing photoelectric conversion of the reflected light by the photodetector is supplied to an RF amplification section 7. Accordingly, an HF signal SHF having information of the optical disk DSK is supplied from the RF amplification section 7 to an HF signal feature extraction section 6.

The above-mentioned light pulse strategy is a technique wherein record pits are formed in appropriate form by optimized laser light emitted from a semiconductor laser as the form of a light pulse relative to the record mark length is adjusted, so that a high-quality reproduction signal with occurrence of jitter, etc., suppressed can be provided when information is reproduced.

The carriage 4 is carriage-servoed by the servo circuit 5 and moves the pickup 3 in the direction of the radius of the optical disk DSK.

The pickup 3 is provided with an actuator (not shown) for driving the object lens contained in the optical system and the servo circuit 5 controls the actuator, thereby per forming focus servo and tracking servo.

In addition to the HF signal feature extraction section 6 and the RF amplification section 7, the information record apparatus 1 further comprises a decoder section 8, an output section 9, an input section 10, an encoder section 11, a record power adjustment section 12, a system controller 13, a storage section 14, and an operation/display section 15.

The system controller 13 has a microprocessor or microprocessing unit (MPU) and performs centralized control of the whole operation of the information record apparatus 1 in addition to control of power calibration described later by executing a predetermined system program.

The storage section 14 is implemented as nonvolatile memory of SRAM etc., and stores n pieces of variable data (Dc1k, Dc2k, ..., Dcnk) to variably set the recommended emission power of the semiconductor laser at n steps. In the embodiment, n=15 steps.

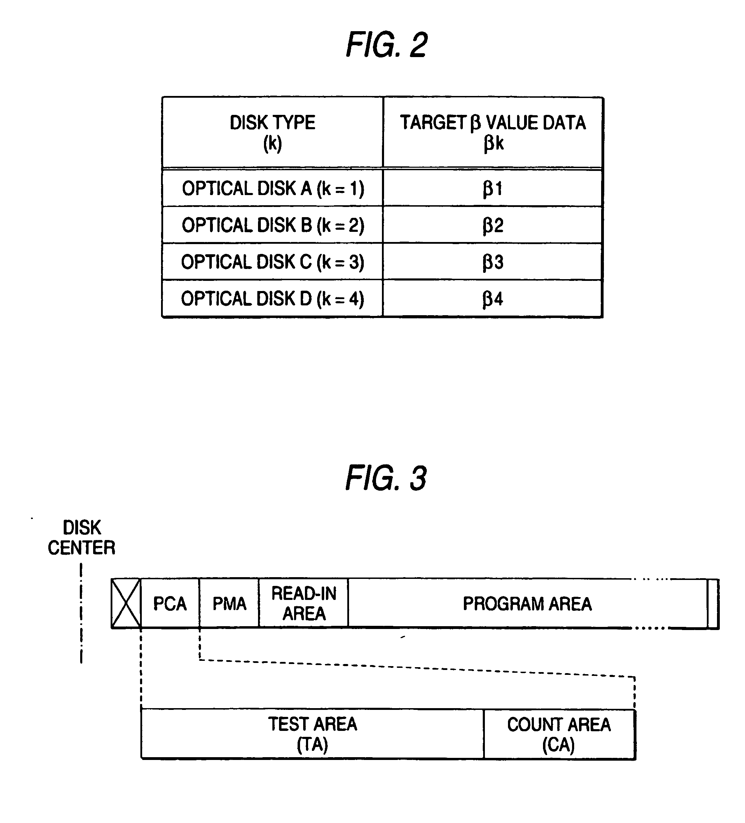

Further, the storage section 14 stores target β value data βk for each optical disk DSK type k, as shown in FIG. 2.

Here, the target β value data βk is data indicating each β value when calculation of the expression (1) shown above is performed based on the HF signal recorded in a state in which the record state of each type of optical disk satisfies the predetermined specification and a sufficient margin is taken for variations in record state; the target β value data βk is previously found by experiment. The letter k denotes the optical disk type.

The operation/display section 15 comprises an operation section for the user to perform entry operation of starting to record information, etc., and a display section for displaying the operation status, an operation menu, etc., of the information record apparatus 1.

The input section 10 performs preprocessing of converting an external input signal Sin at the information recording time into digital input data Din, etc., and the encoder section 11 EFM-modulates the digital input data Din, etc., thereby generating record data DWT.

The record power adjustment section 12 generates an optimum pulse by light pulse strategy from the record data DWT, generates a current Id of a pulse train based on the optimum pulse, and supplies the current Id to the semiconductor laser in the pickup for emitting write laser light. The current value of the current Id is adjusted in accordance with specification from the system controller 13, whereby the emission power of the semiconductor laser is controlled.

When information is recorded, the record power adjustment section 12 generates the current Id of a pulse train by the light pulse strategy and drives the semiconductor laser in the pickup, thereby emitting pulse-like write laser light; when information is reproduced, the record power adjustment section 12 supplies a current Id of a constant value to the semiconductor laser, thereby emitting read laser light of constant power.

When the photoelectric conversion signal Sdt is supplied from the photodetector placed in the pickup 3 to the RF amplification section 7 and the HF signal SHF generated by the RF amplification section 7 based on the photoelectric conversion signal Sdt is supplied to the HF signal feature extraction section 6, the HF signal feature extraction section 6 detects levels of the waveform of the HF signal SHF. Top peak level a1 corresponding to the potential difference between the potential indicating the strength of reflected light from a land where no record pit is formed and the potential of AC ground GND and bottom peak level a2 corresponding to the potential difference between the potential indicating the strength of reflected light from a record pit and the potential of AC ground GND are detected, as shown in FIG. 7, and the detection result of the top peak level a1 and the bottom peak level a2 is supplied to the system controller 13 as feature data DHF indicating the record state of the optical disk DSK.

The system controller 13 performs calculation of the expression (1) shown above based on the feature data DHF to find a β value.

The RF amplification section 7 generates the HF signal SHF and also generates an RF signal SRF from the HF signal SHF and supplies the RF signal SRF to the decoder section 8, which then performs processing of EFM demodulation, etc., for the RF signal SRF and supplies the result to the output section 9, which then performs processing of D/A conversion, etc., for the data from the decoder section 8 and outputs an output signal Sout.

The RF amplification section 7 generates an error signal of a focus error, a tracking error, and the like from the photoelectric conversion signal Sdt and supplies the error signal to the servo circuit 5, whereby various servos such as focus servo and tracking servo are performed.

Next, the operation of the described information record apparatus 1, mainly the operation for performing power calibration to optimize the emission power of the semiconductor laser placed in the pickup 3 will be discussed. The power calibration operation for recording information on CD-R will be discussed as a typical example.

First, as shown in FIG. 3, in CD-R, a power calibration area PCA is previously allocated to a portion on the disk center side (at the inner radius of the optical disk) from a read-in area, and is made up of a test area TA and a count area CA.

The test area TA is provided for forming a record pit as trial write by write laser light emitted from the semiconductor laser. The count area CA is provided for counting the number of records already made in the test area TA, and one frame is recorded in response to one record (trial write).

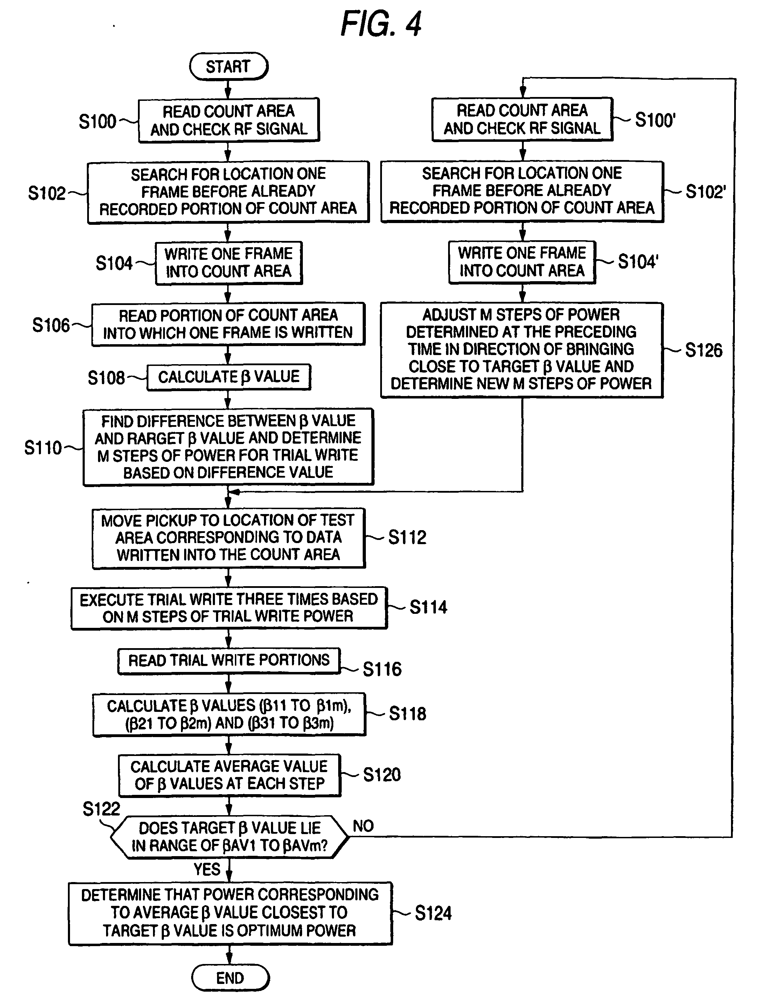

FIG. 4 is a flowchart to describe the power calibration operation. When the user gives a record start command, power calibration is conducted under the control of the system controller 13.

In FIG. 4, first at step S100, the pickup 3 is moved to the count area CA for reproducing information. The HF signal SHF generated as the information is reproduced is checked.

Next, at step S102, a portion where data is already recorded is checked based on the provided HF signal SHF and a search is made for the location one frame before the already recorded portion.

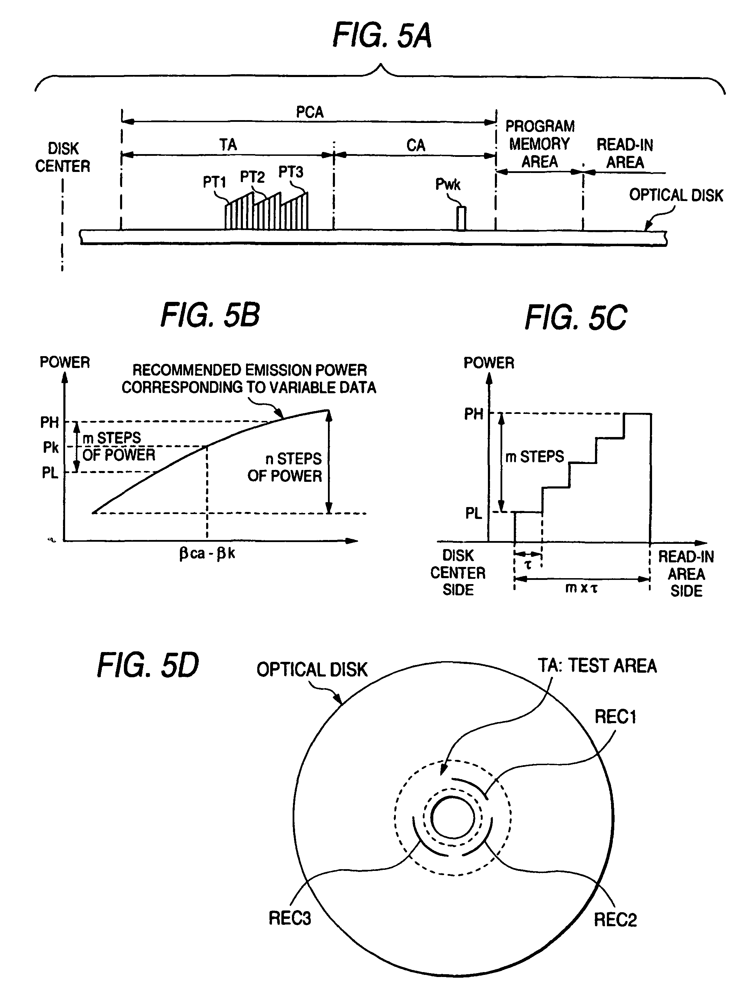

Next, at step S104, the information record apparatus 1 is set to an information record mode and data is recorded by fixed recommended emission power Pk starting at the location one frame before the already recorded portion in the count area CA. That is, as shown in FIG. 5 (A), data is recorded starting at the location one frame before the already recorded portion in the count area CA by the recommended emission power Pk of a constant value predetermined for CR-R.

The recommended emission power Pk can also be changed based on information previously written on the disk, etc.

Next, at step S106, the information record apparatus 1 is again set to an information reproduction mode and the data recorded in the count area CA is read. At step S108, $\beta$ value $\beta$ca is calculated based on the feature data DHF provided from the HF signal SHF.

Next, at step S110, the difference between the $\beta$ value $\beta$ca and the target $\beta$ value $\beta$k is found and m steps of emission power corresponding to the difference value ($\beta$ca-$\beta$k) are determined. That is, as shown in FIG. 5 (B), m recommended emission powers PL to PH preceding and following the recommended emission power Pk corresponding to the difference value ($\beta$ca-$\beta$k) as the center are selected from among n recommended emission powers corresponding to the variable data pieces (Dc1l, Dc2l, ..., Dcnl) in the storage section 14. In the embodiment, m is determined five (m=5).

Accordingly, as shown in FIG. 5 (C), m=five recommended emission powers PL to PH are selected from among the n=15 recommended emission powers corresponding to the variable data pieces (Dc1l, Dc2l, ..., Dcnl) and further m=five variable data pieces corresponding to the m=five recommended emission powers PL to PH are determined to be variable data for trial write.

For example, if the recommended emission power Pk corresponding to the difference value ($\beta$ca-$\beta$k) corresponds to variable data piece Dc17, variable data pieces (Dc15, Dc16, Dc17, Dc18, and Dc19) are determined to be variable data for trial write.

Next, at step S112, the pickup 3 is moved to the location of the test area corresponding to the data written into the count area CA.

Next, at step S114, the information record apparatus 1 is again set to the information record mode and the system controller 13 varies the emission power P of the semiconductor laser based on the variable data for trial write and writes record pits at m steps into the test area TA for a try. In the embodiment, trial write based on the variable data for trial write is executed three times.

That is, as shown as symbols PT1 to PT3 in FIG. 5 (A), when the first trial write PT1 is executed based on the variable data for trial write, subsequently the second trial write PT2 is executed based on the variable data for trial write and further subsequently the third trial write PT3 is executed based on the variable data for trial write. Therefore, trial write of the record pits at m steps by the m steps of the emission powers PL to PH shown in FIG. 5 (C) is executed three times. Each step of the emission powers PL to PH is every predetermined required time $\tau$. Accordingly, three trial write portions REC1 to REC3 are formed in the test area TA of the optical disk, as shown in FIG. 5 (D).

For example, for CD-R, if the required time $\tau$ for one step is set to one ATIP frame and five steps are repeated three times for executing trial write in the test area TA of power calibration, three times at each step are separated almost at angles of 120 degrees each relative to the disk center and are averaged, whereby it is made possible to cancel the effects of side run-out, eccentricity, etc., of the disk.

Next, at step S116, the information record apparatus 1 is again set to the information reproduction mode and the three trial write portions REC1 to REC3 are read, whereby reference data DHF having information in each of the trial write portions REC1 to REC3 is acquired. Next, at step S118, $\beta$ values ($\beta$11 to $\beta$1m), $\beta$ values ($\beta$21 to $\beta$2m), and $\beta$ values ($\beta$31 to $\beta$3m) corresponding to the trial write portions REC1 to REC3 are calculated based on the reference data DHF. That is, the m $\beta$ values ($\beta$11 to $\beta$1m) are calculated based on the m reference data pieces DHF provided corresponding to the trial write portion REC1, the m $\beta$ values ($\beta$21 to $\beta$2m) are calculated based on the m reference data pieces DHF provided corresponding to the trial write portion REC2, and the m $\beta$ values ($\beta$31 to $\beta$3m) are calculated based on the m reference data pieces DHF provided corresponding to the trial write portion REC3.

Next, at step S120, average values of the $\beta$ values, $\beta$AV1 to $\beta$AVm, are calculated for each of m steps of the $\beta$ values ($\beta$11 to $\beta$1m), ($\beta$21 to $\beta$2m), and ($\beta$31 to $\beta$3m) as shown in the following expressions (2-1) to

(2-m):

$$\beta AV1 = (\beta 11+\beta 21+\beta 31)/3 \qquad (2\text{-}1)$$

$$\beta AV2 = (\beta 12+\beta 22+\beta 32)/3 \qquad (2\text{-}2)$$

$$\beta AVm = (\beta 1m+\beta 2m+\beta 3m)/3 \qquad (2\text{-}m)$$

Next, at step S122, whether or not the target β value βk lies in the range of the average values βAV1 to βAVm is determined. If the target β value βk lies in the range (Yes at step S122), control goes to step S124 and the emission power corresponding to the average value closest to the target β value βk, of the average values βAV1 to βAVm is determined the optimum emission power Popt and further the variable data for trial write corresponding to the optimum emission power Popt is adopted as the data to set the optimum emission power (optimum data).

Next, at step S124, the optimum data is stored in the storage section 14 as history data and then is supplied to the record power adjustment section 12, whereby an instruction is given so as to adjust the drive current Id based on the optimum data when actual information recording is executed, the pickup 3 is moved to the program area of the optical disk DSK, and a wait is made until actual information recording is started. The power calibration is now complete.

On the other hand, if the target β value βk does not lie in the range of the average values βAV1 to βAVm (No) at step S122, control goes to step S126 to again conduct the power calibration from the beginning, and the m steps of the emission powers PL to PH determined at the preceding time are adjusted so as to provide the target β value, thereby determining new m steps of emission powers PL to PH for trial write. In the adjustment at step S126, the m steps of emission powers PL to PH for trial write are finely adjusted in a predetermined amount at a time.

The processing at steps S112 to S122 is repeated. In the repetitive processing, at step S114, trial write into the test area TA is executed based on the m steps of emission powers PL to PH for trial write finely adjusted, the trial write portions are read at step S116, β values are calculated based on the HF signals SHF provided by reading the trial write portions at step S118, new average values βAV1 to βAVm are calculated based on the β values at step S120, and whether or not the target β value βk lies in the range of the new average values βAV1 to βAVm is determined at step S122.

If the average value closest to the target β value βk is found from among the average values βAV1 to βAVm by performing the repetitive processing in the order of steps S100 to S104, S126, and S112 to S122, step S124 is executed and the power calibration is completed, as described above. Again if the target β value βk does not lie in the range of the average values βAV1 to βAVm, the repetitive processing is performed in the order of steps S100 to S104 and S120 and if the target β value βk lies in the range of the average values βAV1 to βAVm and the closest average value is found accordingly, the power calibration is completed.

As described above, according to the embodiment, recording in the count area CA is executed by the recommended emission power, m steps of emission power for trial write are determined based on the difference value between the β value and the target β value (βca-βk) provided by the recording, and trial write into the test area TA is executed by the emission power for trial write.

That is, the m steps of emission power for trial write are determined based on the difference value (βca-βk) provided from the record portion based on the recommended emission power Pk in the count area and thus the emission power for trial write to record in the test area TA is preset to a value close to the optimum emission power.

Thus, in the embodiment, the optimum emission power Popt can be found at higher speed as compared with case where trial write into the test area TA is executed based on a large number of steps (n=15) of emission power and is repeated until the target β value is obtained as in the related art. Further, recording in the test area TA is executed based on a limited number of m steps of emission power for trial write less than the number of steps n and thus the power calibration area can be saved and the optimum emission power Popt can be found at higher speed.

Further, for example, if eccentricity, side run-out or occurs on the optical disk during the trial write, a plurality of pits are recorded in the test area TA based on the emission power for trial write and the optimum emission power Popt is determined based on the average value of the β values provided by recording the pits and thus the optimum emission power Popt can be found at higher speed without being affected by side run-out or occurs on the optical disk.

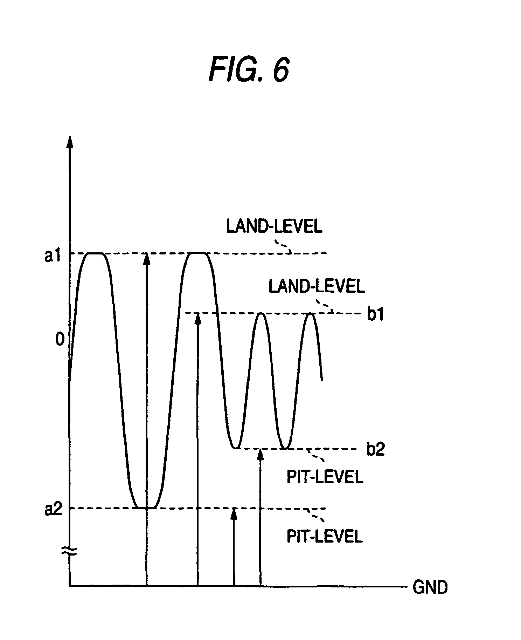

In the embodiment, the β value is adopted as the optimization condition, but the invention is not limited to it. The value of asymmetry of the waveform itself of HF signal SHF as shown in FIG. 6 may be applied as the feature information for optimization in place of the β value.

That is, as shown in FIG. 6, top peak level a1 of the HF signal SHF corresponding to the strength of reflected light from a land where no record pit is formed in optical disk, bottom peak level a2 corresponding to the strength of reflected light from a large record pit, top peak level b1 corresponding to the strength of reflected light from a land between small record pits, and bottom peak level b2 corresponding to the strength of reflected light from a small record pit are detected and the detected levels a1, a2, b1, and b2 are applied to the following expression (3), thereby finding the value of asymmetry, which will be hereinafter referred to as $\alpha$ value:

$$\alpha = \{(a1+a2) - (b1+b2)\}/\{2 \times (a1-a2)\} \qquad (3)$$

The target $\alpha$ value data corresponding to each type of disk is previously stored in the storage section 14 in place of the target $\beta$ value data $\beta k$, and the $\alpha$ values may be applied in the processing shown in FIG. 4, 5 in place of the $\beta$ values for performing the power calibration.

Modulation depths may be adopted as the optimization condition in place of using the $\beta$ values as the optimization condition.

That is, modulation depth M found by detecting the top peak level a1 and the bottom peak level a2 of the HF signal SHF output from the RF amplification section 7 and performing calculation of the following expression (4) may be adopted as the optimization condition:

$$M = (a1-a2)/a1 \qquad (4)$$

The target modulation depth data corresponding to each type of disk is previously stored in the storage section 14 in place of the target $\beta$ value data $\beta k$, and the modulation depths may be applied in the processing shown in FIG. 4, 5 in place of the $\beta$ values for performing the power calibration.

Further, in the embodiment described above, the information record apparatus implemented as hardware has been described, but the invention is not limited to it. For example, the hardware configuration of the information record apparatus of the embodiment may be implemented as a computer program (emulator) and an electronic machine containing a microprocessor, such as a personal computer, may be controlled based on the computer program for delivering functions equal to those of the information record apparatus implemented as hardware.

The computer program may be recorded on an information record medium, such as CD (compact disk) or DVD (digital video disk or digital versatile disk), as an application file and the application file may be installed in or downloaded into an electronic machine such as a personal computer capable of playing back the information record medium for executing the computer program.

As described above, according to the invention, recording on an optical disk is executed by applying the write light of the predetermined power, whereby write light of the plurality of steps of power for trial write to determine appropriate write light power are determined, and trial write onto the optical disk is executed by applying the write light of the plurality of steps of power, the feature information of the record state for each of the record pits at the plurality of steps is extracted based on the signal waveform provided by optically reproducing the record states containing the record pits at the plurality of steps, it is determined that power of write light corresponding the information closest to or almost equal to the target feature information, of the feature information of the record state for each of the record pits at the plurality of steps is the appropriate write light power, and the emission power of the write light is optimized, so that it is made possible to save the power calibration area and the time required for the power calibration can be shortened.

A plurality of sets of record pits at a plurality of steps are written for a try in the optical disk by applying the write light of the plurality of steps of power, the feature information of the record state for each of the record pits in the plurality of sets and at the plurality of steps is extracted based on the signal waveform provided by optically reproducing the record states containing the plurality of sets of the record pits written for a try, average feature information of the record state for each of the record pits at the plurality of steps is found, it is determined that power of write light corresponding the information closest to or almost equal to the target feature information, of the average feature information is appropriate write light power, and the emission power of the write light is optimized. Thus, the effects of side run-out, eccentricity, unevenness, etc., of the optical information record medium can be suppressed and the accuracy of the power calibration can be improved.

**Claims**

1. An information record apparatus (1) for adjusting power of write light onto an optical information record medium, the information record apparatus comprising:

   a light source for emitting write light having a predetermined power;
   a power adjustment section (12) for adjusting the emission power (P) of the write light;
   a control section (13) for controlling the power adjustment section to set a plurality of write light each having a different emission power;
   a write section for applying the plurality of write light emitted from the light source to record a plurality of record pits in the optical information record medium; and
   a feature extraction section (6) for optically reproducing a plurality of record states containing the plurality of record pits to produce a first signal waveform, the feature extraction section extracting a first feature information of the plurality of record states for each of the plurality of record pits based on the first signal waveform,

   wherein the control section determines that power of write light corresponding to feature information closest to or equal to target feature information, of the first feature information extracted by the feature information section is appropriate write light power, and controls the power adjustment section in use so that a power of the write light emitted from the light source is identical with the appropriate write light power, **characterised in that**:

the write section is adapted to record a single record pit to the record medium before the write section records the plurality of record pits to the record medium;
the feature extraction section optically reproduces a record state containing the single record pit to produce a second signal waveform, the feature extraction section extracting a second feature information of the record state based on the second signal waveform, and
the control section sets the plurality of write light based on the second feature information extracted by the feature extraction section.

2. The information record (1) apparatus as claimed in claim 1, wherein the write section records a plurality sets of record pits in the optical information record medium;
the feature extraction section (6) extracts the feature information of the record state for each of the record pits in the plurality sets based on a signal waveform provided by optically reproducing the record states containing the plurality sets of the recorded record pits; and
the control section (13) finds average feature information of the record state for each of the record pits in the plurality sets, determines that power of write light corresponding to information closest to or almost equal to target feature information, of the average feature information is appropriate write light power, and controls the power adjustment section (12) to adjust the emission power of the write light.

3. The information record apparatus (1) as claimed in claim 1 wherein the predetermined power of the write light is set based on characteristic information recorded on the optical information record medium in advance.

4. The information record apparatus (1) as claimed in claim 1, wherein the control section sets the plurality of write light based on a difference between the feature information and the target feature information.

5. The information record apparatus (1) as claimed in claim 1, wherein the feature information and the target feature information are β values.

6. The information record apparatus (1) as claimed in claim 1, wherein the feature information and the target feature information are values of asymmetry of the first or second signal waveform provided by optically reproducing.

7. The information record apparatus (1) as claimed in claim 1, wherein the feature information and the target feature information are modulation depths.

8. The information record apparatus (1) as claimed in claim 1, wherein the optical information record medium is CD-R.

9. The information record apparatus (1) as claimed in claim 8, wherein the write section records in a count area provided in the CD-R by applying write light of fixed power and records a plurality of record pits at in a test area of the CD-R by applying a plurality of write light each different in power.

10. An information record method for adjusting power of write light onto an optical information record medium, the information record method comprising the steps of:

applying a plurality of write light to record a plurality of record pits in the optical information record medium;
optically reproducing a plurality of record states containing the record pits to produce a first signal waveform;
extracting the feature information of the record state for each of the record pits based on the first signal waveform;
determining that power of write light corresponding to information closest to or almost equal to target feature information, of the feature information of the record state for each of the record pits is appropriate write light power; and
adjusting the power of the write light in use to be identical with the appropriate write light power, **characterised by** the steps of:

applying (S114) write light having specific power or predetermined power emitted from a light source to record a single record pit in the optical information record medium;
optically reproducing (S116) a record state containing the record pit to produce a second signal waveform;
extracting (S118) second feature information of the record state based on the first signal waveform;
setting (S124) the plurality of write light each having a different emission power based on the second feature information.

11. An information record medium recording a control information program to be executed in a computer, the control information program comprising:

applying a plurality of write light to record a plurality of record pits in the optical information record medium;
optically reproducing a plurality of record states containing the record pits to produce a first signal waveform;
extracting the feature information of the record state for each of the record pits based on the first signal waveform;
determining that power of write light corresponding to information closest to or almost equal to targ et feature information, of the feature information of the record state for each of the record pits is appropriate write light power; and
adjusting the power of the write light, in use to be identical with the appropriate write light power, **characterised by** the steps of:

applying (S114) write light having specific power or predetermined power emitted from a light source to record a single record pit in the optical information record medium;
optically reproducing (S116) a record state containing the record pit to produce a second signal waveform;
extracting (S118) second feature information of the record state based on the first signal waveform;
setting (S124) the plurality of write light each having a different emission power based on the second feature information.

**Patentansprüche**

1. Informationsaufzeichnungsvorrichtung (1) zum Regulieren der Leistung von Schreib-Licht auf einem optischen Informationsaufzeichnungsmedium, wobei die Informationsaufzeichnungsvorrichtung umfasst:

eine Lichtquelle, die Schreib-Licht mit einer vorgegebenen Leistung emittiert;

einen Leistungsregulierabschnitt (12), der die Emissionsleistung (P) des Schreib-Lichts reguliert;

einen Steuerabschnitt (13), der den Leistungsregulierabschnitt so steuert, dass eine Vielzahl von Schreib-Lichtem eingestellt werden, die jeweils eine andere Emissionsleistung haben;

einen Schreibabschnitt, der die Vielzahl von Schreib-Lichtern, die von der Lichtquelle emittiert werden, einsetzt, um eine Vielzahl von Aufzeichnungs-Pits in dem optischen Informationsaufzeichnungsmedium aufzuzeichnen; und

einen Eigenschaftsabfrageabschnitt (6), der eine Vielzahl von Aufzeichnungszuständen, die die Vielzahl von Aufzeichnungs-Pits enthalten, optisch wiedergibt, um eine erste Signal-Wellenform zu erzeugen, wobei der Eigenschaft-Abfrageabschnitt erste Eigenschaftsinformationen der Vielzahl von Aufzeichnungszuständen für jedes der Vielzahl von Aufzeichnungs-Pits auf Basis der ersten Signal-Wellenform abfragt;

wobei der Steuerabschnitt feststellt, dass die Leistung von Schreib-Licht, das Eigenschaftsinformationen entspricht, die am nächsten an Soll-Eigenschaftsinformationen der durch den Eigenschaftsinformationsabschnitt abgefragten ersten Eigenschaftsinformationen liegen oder ihnen gleich sind, geeignete Schreib-Lichtleistung ist und den Leistungsregulierabschnitt so steuert, dass eine Energie des Schreib-Lichtes, das von der Lichtquelle emittiert wird, mit der geeigneten Schreib-Lichtenergie identisch ist, **dadurch gekennzeichnet, dass**:

der Schreibabschnitt so eingerichtet ist, dass er Aufzeichnungs-Pits mit konstanter Leistung mit von der Lichtquelle emittiertem Schreib-Licht auf dem Aufzeichnungsmedium aufzeichnet, bevor der Schreibabschnitt die Vielzahl von Aufzeichnungs-Pits auf dem Aufzeichnungsmedium aufzeichnet;

der Eigenschaftsabfrageabschnitt Aufzeichnungszustände, die die mit konstanter Leistung aufgezeichnete Aufzeichnungs-Pits enthalten, optisch wiedergibt, um eine zweite Signal-Wellenform zu erzeugen, und der Eigenschaftsabfrageabschnitt eine zweite Eigenschaftsinformation des Aufzeichnungszustandes auf Basis der zweiten Signal-Wellenform abfragt, und

der Steuerabschnitt die Vielzahl von Schreib-Lichtem auf Basis der durch den Eigenschaftsabfrageabschnitt abgefragten zweiten Eigenschaftsinformationen einstellt.

2. Informationsaufzeichnungsvorrichtung (1) nach Anspruch 1, wobei der Schreibabschnitt eine Vielzahl von Gruppen von Aufzeichnungs-Pits in dem optischen Informationsaufzeichnungsmedium aufzeichnet;

der Eigenschaftsabfrageabschnitt (6) die Eigenschaftsinformationen des Aufzeichnungszustandes für jedes der Aufzeichnungs-Pits in der Vielzahl von Gruppen auf Basis einer Signal-Wellenform abfragt, die geschaffen wird, indem die Aufzelchnungszustände, die die Vielzahl von Gruppen der aufgezeichneten Aufzeichnungs-Pits enthalten, optisch wiedergegeben werden; und

der Steuerabschnitt (13) Durchschnitts-Eigenschaftsinformationen des Aufzeichnungszustandes für jedes der Aufzeichnungs-Pits in der Vielzahl von Gruppen ermittelt, feststellt, dass Leistung von Schreib-Licht, das Informationen Durchschnitts-Eigenschaftsinformationen entspricht, die am nächsten an Soll-Eigenschaftsinformationen liegen oder ihnen nahezu entsprechen, die geeignete Schreib-Lichtleistung ist und den Leistungsregulierabschnitt (12) so steuert, dass die Emissionsleistung des Schreib-Lichts eingestellt wird.

3. Informationsaufzeichnungsvorrichtung (1) nach Anspruch 1, wobei die vorgegebene Leistung des Schreib-Lichtes auf Basis von im Voraus auf dem optischen Informationsaufzeichnungsmedium aufgezeichneten Charakteristik-Informationen eingestellt wird.

4. Informationsaufzeichnungsvorrichtung (1) nach Anspruch 1, wobei der Steuerabschnitt die Vielzahl von Schreib-Lichtem auf Basis eines Unterschiedes zwischen den Eigenschaftsinformationen und den Soll-Eigenschaftsinformationen einstellt.

5. Informationsaufzeichnungsvorrichtung (1) nach Anspruch 1, wobei die Eigenschaftsinformationen und die Soll-Eigenschaftsinformationen β-Werte sind.

6. Informationsaufzeichnungsvorrichtung (1) nach Anspruch 1, wobei die Eigenschaftsinformationen und die Soll-Eigenschaftsinformationen Werte der Asymmetrie der durch optisches Wiedergeben geschaffenen ersten oder zweiten Signal-Wellenform sind.

7. Informationsaufzeichnungsvorrichtung (1) nach Anspruch 1, wobei die Eigenschaftsinformationen und die Soll-Eigenschaftsinformationen Modulationstiefen sind.

8. Informationsaufzeichnungsvorrichtung (1), wobei das optische Informationsaufzeichnungsmedium eine CD-R ist.

9. Informationsaufzeichnungsvorrichtung (1) nach Anspruch 8, wobei der Schreibabschnitt in einem Zählbereich, der in der CD-R vorhanden ist, aufzeichnet, indem er Schreib-Licht mit unveränderlicher Leistung einsetzt, und eine Vielzahl von Aufzeichnungs-Pits in einem Testbereich der CD-R aufzeichnet, indem er eine Vielzahl von Schreib-Lichtern, die jeweils verschiedene Leistungen haben, einsetzt.

10. Informationsaufzeichnungsverfahren zum Einstellen der Leistung von Schreib-Licht auf einem optischen Informationsaufzeichnungsmedium, wobei das Informationsaufzeichnungsverfahren die folgenden Schritte umfasst:

Einsetzen einer Vielzahl von Schreib-Lichtern, um eine Vielzahl von Aufzeichnungs-Pits in dem optischen Informationsaufzeichnungsmedium aufzuzeichnen;

optisches Wiedergeben einer Vielzahl von Aufzeichnungs-Zuständen, die die Aufzeichnungs-Pits enthalten, um eine erste Signal-Wellenform zu erzeugen;

Abfragen der Eigenschaftsinformationen des Aufzeichnungs-Zustandes für jedes der Aufzeichnungs-Pits auf Basis der ersten Signal-Wellenform;

Feststellen, dass Leistung von Schreib-Licht, das Informationen der Eigenschaftsinformationen des Aufzeichnungs-Zustandes für jedes der Aufzeichnungs-Pits entspricht, die am nächsten an Soll-Eigenschaftsinformationen liegen oder diesen nahezu gleich sind, geeignete Schreib-Lichtleistung ist; und

Regulieren der Leistung von Schreib-Licht, **gekennzeichnet durch** die folgenden Schritte:

Einsetzen (S114) von Schreib-Licht mit spezifischer-Leistung oder vorgegebener Leistung, das von einer Lichtquelle emittiert wird, um ein einzelnes Aufzeichnungs-Pit in dem optischen Informationsaufzeichnungsmedium aufzuzeichnen;

optisches Wiedergeben (S116) eines Aufzeichnungs-Zustandes, der das Aufzeichnungs-Pit enthält, um eine zweite Signal-Wellenform zu erzeugen;

Abfragen (S118) zweiter Eigenschaftsinformationen des Aufzeichnungs-Zustandes auf Basis der ersten Signal-Wellenform;

Einstellen (S124) der Vielzahl von Schreib-Lichtern, die jeweils eine andere Emissionsleistung haben, auf Basis der zweiten Eigenschaftsinformationen.

11. Informationsaufzeichnungsmedium, auf dem ein in einem Computer auszuführendes Steuer-Informationsprogramm aufgezeichnet ist, wobei das Steuer-Informationsprogramm umfasst:

Einsetzen einer Vielzahl von Schreib-Lichtern, um eine Vielzahl von Aufzeichnungs-Pits in dem optischen Informationsaufzeichnungsmedium aufzuzeichnen;

optisches Wiedergeben einer Vielzahl von Aufzeichnungs-Zuständen, die die Aufzeichnungs-Pits enthalten, um eine erste Signal-Wellenform zu erzeugen;

Abfragen der Eigenschaftsinformationen des Aufzeichnungs-Zustandes für jedes der Aufzeichnungs-Pits auf Basis der ersten Signal-Wellenform;

Feststellen, dass die Leistung von Schreib-Licht, das Informationen der Eigenschaftsinformationen des Aufzeichnungs-Zustandes für jedes der Aufzeichnungs-Pits entspricht, die am nächsten an Soll-Eigenschaftsinformationen liegen oder ihnen nahezu gleich ist, geeignete Schreib-Lichtleistung ist; und

Regulieren der Leistung des Schreib-Lichts, **gekennzeichnet durch** die folgenden Schritte:

Einsetzen (S114) von Schreib-Licht mit einer speziellen Leistung oder einer vorgegebenen Leistung, das von einer Lichtquelle emittiert wird, um ein einzelnes Aufzeichnungs-Pit in dem optischen Informationsaufzeichnungsmedium aufzuzeichnen;

optisches Wiedergeben (S116) eines Aufzeichnungs-Zustandes, der das Aufzeichnungs-Pit enthält, um eine zweite Signal-Wellenform zu erzeugen;

Abfragen (S118) zweiter Eigenschaftsinformationen des Aufzeichnungs-Zustandes auf Basis der ersten Signal-Wellenform;

Einstellen (S124) der Vielzahl von Schreib-Lichtern, die jeweils eine andere Emissionsleistung haben, auf Basis der zweiten Eigenschaftsinformationen.

**Revendications**

1. Dispositif (1) d'enregistrement d'informations pour ajuster la puissance d'une lumière d'écriture sur un support d'enregistrement d'informations optiques, le dispositif d'enregistrement d'informations comprenant:

une source de lumière servant à émettre une lumière d'écriture possédant une puissance prédéterminée;
une section (12) d'ajustement de puissance pour ajuster la puissance d'émission (P) de la lumière d'écriture;
une section de commande (13) pour commander la section d'ajustement de puissance pour régler une pluralité de lumières d'écriture ayant chacune une puissance d'émission différente;
une section d'écriture pour appliquer la pluralité de lumières d'écriture émises par la source de lumière pour enregistrer une pluralité de micromoulures d'enregistrement sur le support d'enregistrement d'informations optiques; et
une section (6) d'extraction de caractéristiques pour reproduire optiquement une pluralité d'états d'enregistrement contenant la pluralité de micromoulures d'enregistrement pour produire une première forme d'onde de signal, la section d'extraction de caractéristiques extrayant une première information caractéristique de la pluralité d'états d'enregistrement pour chacune de la pluralité de micromoulures d'enregistrement sur la base de la première forme d'onde de signal;

dans lequel la section de commande détermine que la puissance de la lumière d'écriture correspondant à une information de caractéristique la plus proche de ou égale à l'information de caractéristique cible de la première information de caractéristique extraite par la section d'extraction d'informations de caractéristiques est la puissance appropriée de la lumière d'écriture et commande l'action d'ajustement de puissance de sorte qu'une puissance de la lumière d'écriture émise par la source de lumière est identique à la puissance appropriée de la lumière d'écriture,
**caractérisé en ce que**:

la section d'écriture est adaptée pour enregistrer des micromoulures d'enregistrement sur le support d'enregistrement avec une puissance constante, au moyen de la lumière d'écriture émise par la source de lumière, avant que la section d'écriture n'enregistre la pluralité de micromoulures d'enregistrement sur le support d'enregistrement;
la section d'extraction de caractéristiques reproduit optiquement des états d'enregistrement contenant les micromoulures d'enregistrement enregistrées avec une puissance constante pour produire une seconde forme d'onde de signal, la section d'extraction de caractéristiques extrayant une seconde information de caractéristique de l'état d'enregistrement sur la base de la seconde forme d'onde de signal, et

la section de commande règle la pluralité de lumières d'écriture sur la base de la seconde information de caractéristique extraite par la section d'extraction de caractéristiques.

2. Dispositif (1) d'enregistrement d'informations selon la revendication 1, dans lequel les sections d'écriture enregistrent une pluralité d'ensembles de micromoulures d'enregistrement dans le support d'enregistrement d'informations optiques;

la section (6) d'extraction de caractéristiques extrait l'information de caractéristique de l'état d'enregistrement pour chacune des micromoulures d'enregistrement dans la pluralité d'ensembles sur la base d'une forme d'onde de signal fournie par reproduction optique des états d'enregistrement contenant la pluralité d'ensembles des micromoulures d'enregistrement enregistrées; et

la section de commande (13) détermine l'information de caractéristique moyenne de l'état d'enregistrement pour chacune des micromoulures d'enregistrement dans la pluralité d'ensembles, établit que la puissance de la lumière d'écriture correspondant à l'information la plus proche de ou presque égale à l'information de caractéristique cible, de l'information de caractéristique moyenne est une puissance appropriée de la lumière d'écriture, et commande la section d'ajustement de puissance (12) pour ajuster la puissance d'émission de la lumière d'écriture.

3. Dispositif (1) d'enregistrement d'informations selon la revendication 1, dans lequel la puissance prédéterminée de la lumière d'écriture est réglée sur la base d'une information de caractéristique enregistrée par avance sur le support d'enregistrement d'informations optiques.

4. Dispositif (1) d'enregistrement d'informations selon la revendication 1, dans lequel la section de commande règle la pluralité de lumières d'écriture sur la base d'une différence entre l'information de caractéristique et l'information de caractéristique cible.

5. Dispositif (1) d'enregistrement d'informations selon la revendication 1, dans lequel l'information de caractéristique et l'information de caractéristique cible sont des valeurs β.

6. Dispositif (1) d'enregistrement d'informations selon la revendication 1, dans lequel l'information de caractéristique et l'information de caractéristique cible sont des valeurs de dissymétrie de la première ou de la seconde forme d'onde de signal fournie par reproduction optique.

7. Dispositif (1) d'enregistrement d'informations selon la revendication 1, dans lequel l'information de caractéristique et l'information de caractéristique cible sont des profondeurs de modulation.

8. Dispositif (1) d'enregistrement d'informations selon la revendication 1, dans lequel le support d'enregistrement d'informations optiques est un CD-R.

9. Dispositif (1) d'enregistrement d'informations selon la revendication 8, dans lequel la section d'écriture réalise un enregistrement dans une zone de comptage prévue dans le CD-R par application d'une lumière d'écriture ayant une puissance fixe et enregistre une pluralité de micromoulures d'enregistrement dans une zone de test du CD-R par application d'une pluralité de lumières d'écriture ayant chacune une puissance différente.

10. Procédé d'enregistrement d'information pour ajuster la puissance d'une lumière d'écriture sur un support d'enregistrement d'informations optiques, le procédé d'enregistrement d'informations comprenant les étapes consistant à:

appliquer une pluralité de lumières d'écriture pour enregistrer une pluralité de micromoulures d'enregistrement dans le support d'enregistrement d'informations optiques;

reproduire optiquement une pluralité d'états d'enregistrement contenant les micromoulures d'enregistrement pour produire une première forme d'onde de signal;

extraire l'information de caractéristique de l'état d'enregistrement pour chacune des micromoulures d'enregistrement sur la base de la première forme d'onde de signal;

déterminer que la puissance de la lumière d'écriture correspondant à l'information la plus proche de ou égale à l'information de caractéristique cible, de l'information de caractéristique de l'état d'enregistrement pour chacune des micromoulures d'enregistrement est une puissance appropriée de la lumière d'écriture; et

ajuster la puissance de la lumière d'écriture,

**caractérisé par** les étapes consistant à:

appliquer (S114) une lumière d'écriture possédant une puissance spécifique ou une puissance prédéterminée émise par une source de lumière pour enregistrer une seule micromoulure d'enregistrement dans le support d'enregistrement d'informations optiques;

reproduire optiquement (S116) un état d'enregistrement contenant la micromoulure d'enregistrement pour produire une seconde forme d'onde de signal;

extraire (S118) une seconde information de caractéristique de l'état d'enregistrement sur la base de la première forme d'onde de signal;

régler (S124) la pluralité de lumières d'écriture, comportant chacune une puissance d'émission différente sur la base de la seconde information de caractéristique.

**11.** Support d'enregistrement d'informations enregistrant un programme d'information de commande devant être exécuté dans un ordinateur, le programme d'information de commande consistant à:

appliquer une pluralité de lumières d'écriture pour l'enregistrement d'une pluralité de micromoulures d'enregistrement dans le support d'enregistrement d'informations optiques;

reproduire optiquement une pluralité d'états d'enregistrement contenant les micromoulures d'enregistrement pour produire une première forme d'onde de signal;

extraire l'information de caractéristique de l'état d'enregistrement pour chacune des micromoulures d'enregistrement sur la base de la première forme d'onde de signal;

établir que la puissance de la lumière d'écriture correspondant à l'information la plus proche de ou presque égale à une information de caractéristique cible, de l'information de caractéristique de l'état d'enregistrement pour chacune des micromoulures d'enregistrement est une puissance appropriée de lumière d'écriture; et ajuster la puissance de la lumière d'écriture;

**caractérisé par** les étapes consistant à:

appliquer (S114) une lumière d'écriture possédant une puissance spécifique ou une puissance prédéterminée émise par une source de lumière pour enregistrer une seule micromoulure d'enregistrement dans le support d'enregistrement d'informations optiques;

reproduire optiquement (S116) un état d'enregistrement contenant la micromoulure d'enregistrement pour produire une seconde forme d'onde de signal;

extraire (S118) une seconde information de caractéristique de l'état d'enregistrement sur la base de la première forme d'onde de signal;

régler (S124) la pluralité de lumières d'écriture, comportant chacune une puissance d'émission différente sur la base de la seconde information de caractéristique.

FIG. 1

EP 1 191 520 B1

## FIG. 2

| DISK TYPE (k) | TARGET β VALUE DATA βk |
|---|---|
| OPTICAL DISK A (k = 1) | β1 |
| OPTICAL DISK B (k = 2) | β2 |
| OPTICAL DISK C (k = 3) | β3 |
| OPTICAL DISK D (k = 4) | β4 |

## FIG. 3

DISK CENTER

| | PCA | PMA | READ-IN AREA | PROGRAM AREA |

| TEST AREA (TA) | COUNT AREA (CA) |

## FIG. 4

START

S100 — READ COUNT AREA AND CHECK RF SIGNAL

S102 — SEARCH FOR LOCATION ONE FRAME BEFORE ALREADY RECORDED PORTION OF COUNT AREA

S104 — WRITE ONE FRAME INTO COUNT AREA

S106 — READ PORTION OF COUNT AREA INTO WHICH ONE FRAME IS WRITTEN

S108 — CALCULATE β VALUE

S110 — FIND DIFFERENCE BETWEEN β VALUE AND RARGET β VALUE AND DETERMINE M STEPS OF POWER FOR TRIAL WRITE BASED ON DIFFERENCE VALUE

S100' — READ COUNT AREA AND CHECK RF SIGNAL

S102' — SEARCH FOR LOCATION ONE FRAME BEFORE ALREADY RECORDED PORTION OF COUNT AREA

S104' — WRITE ONE FRAME INTO COUNT AREA

S126 — ADJUST M STEPS OF POWER DETERMINED AT THE PRECEDING TIME IN DIRECTION OF BRINGING CLOSE TO TARGET β VALUE AND DETERMINE NEW M STEPS OF POWER

S112 — MOVE PICKUP TO LOCATION OF TEST AREA CORRESPONDING TO DATA WRITTEN INTO THE COUNT AREA

S114 — EXECUTE TRIAL WRITE THREE TIMES BASED ON M STEPS OF TRIAL WRITE POWER

S116 — READ TRIAL WRITE PORTIONS

S118 — CALCULATE β VALUES (β11 TO β1m), (β21 TO β2m) AND (β31 TO β3m)

S120 — CALCULATE AVERAGE VALUE OF β VALUES AT EACH STEP

S122 — DOES TARGET β VALUE LIE IN RANGE OF βAV1 TO βAVm?

NO

YES

S124 — DETERMINE THAT POWER CORRESPONDING TO AVERAGE β VALUE CLOSEST TO TARGET β VALUE IS OPTIMUM POWER

END

## FIG. 5A

## FIG. 5B

## FIG. 5C

## FIG. 5D

## FIG. 6

FIG. 7A

FIG. 7B

FIG. 7C

a1 — LAND-LEVEL

0

a2 ---- PIT-LEVEL

$(\beta \fallingdotseq 0)$

$(\beta < 0)$

$(0 < \beta)$

EP 1 191 520 B1

## FIG. 8A

## FIG. 8B

## FIG. 8C

EP 1 191 520 B1

## FIG. 9